Europäisches Patentamt

(19) European Patent Office

Office européen des brevets

(11) Publication number: **0 234 706 B1**

# (12) EUROPEAN PATENT SPECIFICATION

(45) Date of publication of patent specification :
11.09.91 Bulletin 91/37

(51) Int. Cl.⁵ : **F16L 55/04, F01N 7/18,**
**F16L 11/16, F16L 27/10**

(21) Application number : 87300422.0

(22) Date of filing : 19.01.87

(54) Tuned self-damping convoluted conduit.

(30) Priority : 11.02.86 US 828767
11.02.86 US 828295
11.02.86 US 828279
09.06.86 US 873836
11.07.86 US 884312

(43) Date of publication of application :
02.09.87 Bulletin 87/36

(45) Publication of the grant of the patent :
11.09.91 Bulletin 91/37

(84) Designated Contracting States :
DE FR GB IT NL SE

(56) References cited :
AU-A- 484 059
FR-A- 2 080 303
FR-A- 2 416 414
US-A- 4 315 558

(73) Proprietor : Titeflex Corporation
603 Hendee Street P.O. Box 90054
Springfield Massachusetts 01139-0054 (US)

(72) Inventor : Lalikos, James M.
603 Hendee Street P.O. Box 90054
Springfield Massachusetts 01139-0054 (US)
Inventor : Waite, Harold K.
603 Hendee Street P.O. Box 90054
Springfield Massachusetts 01139-0054 (US)

(74) Representative : Spall, Christopher John et al
BARKER, BRETTELL & DUNCAN 138 Hagley
Road
Edgbaston Birmingham B16 9PW (GB)

## Description

This invention relates to convoluted flexible pipes, hoses, ducts, conduits, and the like, suitable for use in hostile environments which impose a high fatigue responsive to shock, vibration and the like, and especially to tuned conduits which are self-damping.

The term "conduit" is generically used herein to refer to almost any kind of device for conducting a fluid, without regard to whether it might be more appropriate to call it a hose, pipe, tube, duct, or the like. The conduit problems outlined below may be illustrated by making a reference to an automotive exhaust system (such as the conduit between an engine exhaust manifold and a catalytic converter, for example). However, the invention is not limited thereto. For example, steam lines, hot air lines, and gaseous fuel lines have many similar problems. Therefore, this reference to automotive exhaust systems is not to be taken as necessarily limiting the invention thereto. Nor, is it limited exclusively to high temperatures or a gaseous media. Reference is made to US-A-4,315,558 and references cited therein for a use of a convoluted conduit in an automobile exhaust system.

An automobile exhaust system is an example of a hostile environment in which the invention might be used. The exhaust is very hot and filled with corrosive gasses under pressure. There are substantial vibrations, both rhythmic (such as vibrations caused by the regular rotation and related harmonics of the engine) and random (such as might be caused by the vehicle striking flying rocks and chuck holes). If a small crack occurs in the conduit, the exhaust gas is forced out by the internal pressure and the resulting corrosion together with normal vibration and flexure cause a rapid deterioration of the system. Another consideration is cost. An automobile is sold in an extremely competitive market where a manufacturer's survival may be determined by a few pennies of extra cost, per part. The cost in time and labor for installation or replacement of exhaust system parts can be another and similar limiting factor. Yet another consideration is noise. An engine usually has to have a muffler, which is an expense, both in the economic sense of cost and in the energy sense because the muffler inherently robs the engine power by increasing the back pressure. If the exhaust tube is able to reduce the noise somewhat, the muffler may be made more simple, with less back pressure.

We are aware of US-A-4 315 558 which discloses a tube that is flexible and subject of "excessive expansion". Bellows give flexibility and braid inhibits flexibility.

We are also aware of FR-A-2 416 414 which discloses a convoluted conduit mode of metal which is capable of sustaining a resonate vibration at engine caused frequencies for inclusion in an exhaust system of an automobile vehicle. FR-A-2 416 414 is concerned with distributing vibrations near the anchor points at opposite ends of the tube to avoid metal fatigue. This is achieved by modifying the modulations of the ringed section at a specific location locally to absorb oscillations. That is to say the tube is made stiffer in an area which is prone to fatigue breakage.

According to our invention a convoluted conduit in accordance with the pre-characterising portion of claim 1 is characterised in that stocking means of flexible material loosely surrounds the conduit and extends along the length thereof, and at least one tuning band surrounding said stocking means is adapted to secure it to said conduit at a point between opposite ends of said conduit.

In keeping with an aspect of the invention, these and other objects are accomplished by a convoluted conduit made from multi-ply coaxial layers of tubing or from a tape wrap, preferably using one or more long, ribbon-like, metal strips (such as stainless steel, carbon steel, brass, bronze, or various alloys), which are wound one over the other to make conduits with multi-layered walls. By selecting a proper configuration for the convolutions, the hose may be made more self-damping so that it resists vibration and thereby sharply reduces metal fatigue. The outer stocking reduces vibration by resisting the formation of a standing wave along the length of the conduit responsive to the various vibrational sources of the associated mechanical system. Depending upon the services to which the conduit may be put, a number of further materials or processing steps may be added. For example, the interfaces between at least the edges of the tape and localised paths at one or more interfaces of tubes may be brazed or may otherwise be bonded by non-metallic high temperature elastomers such as polytetrafluoroethylene polymers, silicones, epoxies, or the like. Also, suitable gaskets, sealing, or bonding may be provided, often in random patterns, between adjacent layers to add damping characteristics and to seal against leaks.

The inventive device may include a multi-ply innercore with a braid having various degrees of slack and at least one "tuning" ring that is used to increase the stiffness and therefore, to control the related natural frequency of the assembly.

When the clamping band is taken up tightly and the braid is in direct contact with the innercore, there is a fully integrated spring system which achieves a natural frequency (resonance) at substantially higher levels than is achieved by either the innercore or the braid, acting alone. However, when there is no clamp ring and the slack braid is anchored to the fittings along with the innercore, there is no contact between the spring and the innercore and each system achieves its own separate resonance frequency, as though the two systems were parallel springs, without contact between them. In this case, the way that the slack braid dampens the innercore is to physically contact it at random periods during vibration. This random contact produces substantial noise and extensive chafing at the interface of the braid and innercore structures. When bands clamp the slack braid at various points along the length of the conduit, they vary the lateral and axial spring rates and thus the related resonance frequencies. Each length of the conduit can be customized for various system conditions of vibration resonance and dampening.

Several embodiments of the invention for accomplishing these and other objects are shown in the attached drawings in which:

FIG. 1 is a partial cross-section of a conventional, non-self-damping symmetrical convoluted conduit made from a single wall of tape wound with a uniform annular or helical pitch;

FIG. 2A is a similar cross-section of a conventional multi-wall conduit made from coaxial tubes;

FIG. 2B is a similar cross-section of a conventional multi-wall tape wound conduit with symmetrical convolutions;

FIG. 3A is a similar cross-section showing a self-damping, non-symmetrical, convoluted conduit made from multiple wall tubes or tape wound tubes with variable plies or variable height for the various convolutions, with layers bonded together in a random pattern to vary the wall thickness;

FIG. 3B shows a single layer conduit incorporating the principles of FIG. 3A;

FIG. 4A is a similar cross-section of a conduit with annular or helical convolutions having variable plies, variable pitch and a variable height;

FIG. 4B shows a single layer conduit incorporating the principles of FIG. 4A;

FIG. 5A is a similar cross-section with yet another form using variable plies and variable annular or helical spacing or pitch with uniform height;

FIG. 5B shows a single layer conduit incorporating the principles of FIG. 5A;

FIG. 6A is a similar cross-section showing a multi-wall wrapped conduit having variable plies and variable wall thickness, the interfaces between separate layers including, by way of example, several forms of metallic and non-metallic gaskets, sealing or bonding between adjacent layers forming the conduit;

FIG. 6B is a side elevation, partially in cross section, of a conduit made of longitudinally or axially wound tape;

FIG. 6C is a cross section of the longitudinally or axially wound conduit taken along line 6C-6C of FIG. 6B;

FIG. 7 is a side elevation, partially in cross-section showing a stocking or sleeve and a damping band for attaching the stocking or sleeve to the conduit at a selected location or locations;

FIG. 8 is a fragmentary and schematical showing of a braid sleeve or stocking having relatively tightly packed wire to provide a tuning ring and relatively loosely packed wire in other areas of the stocking or sleeve;

FIG. 9 shows how a tuning ring may be formed by twisting a braid sleeve or stocking;

FIG. 10 shows a tuning ring which is attached over a braid by a special tensioning tool; and

FIG. 11 shows a tuning ring which is attached over a braid by a self-tightening ring.

The invention relates to convoluted conduits made by wrapping tape around a form. For example, BX cable used to provide electrical wiring in home construction has an armor coating which is a convoluted conduit made by wrapping a metal strip or tape around a form. Certain aircraft fuel lines provide examples of a non-metallic convoluted conduit. This type of fuel line is made by wrapping strips of polytetrafluoroethylene ("Teflon"), layer on layer, and by wrapping a fiber glass tape on the outside of the resultant structure to form a tube or conduit. These and other conduits illustrate tape wrapped conduits similar to that contemplated by the invention.

This invention provides a flexible metal conduit assembly primarily for use with a high temperature transfer of fluids, such as the conduits used in engine exhaust systems, in steam lines, or in hot air lines that are subject to extreme vibration or flexure. In these and similar installations, there is a substantial movement between the ends of the assembly at both very low and very high frequencies, as a result of mechanical vibrations and of the related resonances, as well as from movements due to thermal expansion and contraction which occur during normal operational displacements of parts. For example, the conduit connecting the engine exhaust manifold to the catalytic converter of an automobile may be exposed to an extreme vibration and intermittently heavy resonance up to frequencies in the order of 500 hertz and sometimes more. There may be offset movements in the order of one inch displacements in three planes due to mechanical vibration and expansion caused by exhaust gas at temperatures that may reach 1500°F, and more. Normally, these conduits are very tightly positioned in locations where relatively large hoses, which may be two or more inches in diameter, are restricted to lengths as short as seven or less inches. The fatigue problem is extreme and the restricted spaces demand novel solutions to provide the endurance and to enable the movements which are needed for long term service.

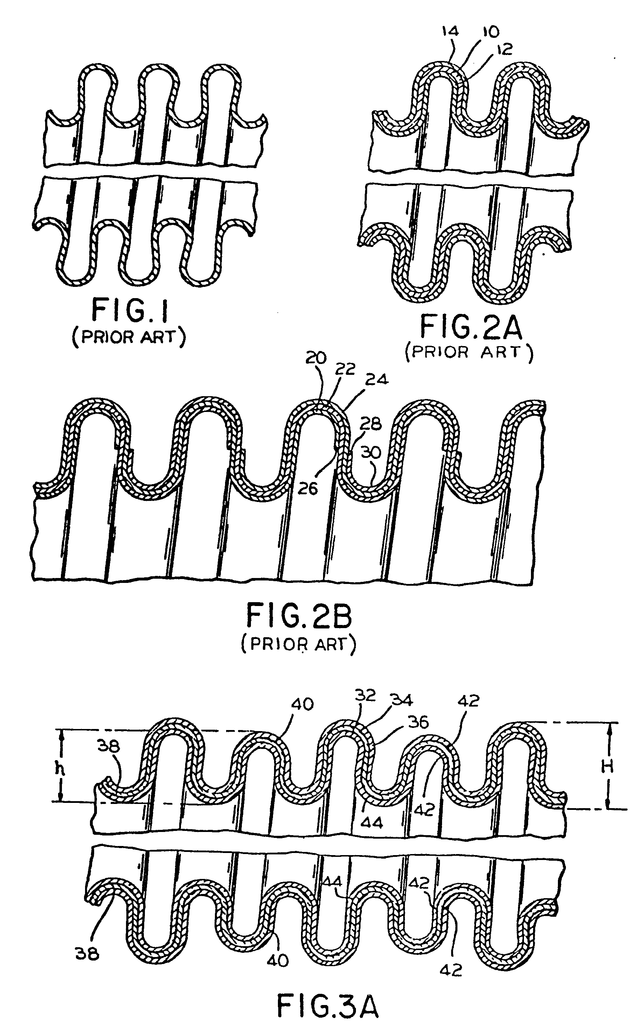

Very often the operating conditions or design requirements preclude the use of most plastics for making a conduit with sufficient and endurance. For the types of applications described above, the conduit may be made from metallic convoluted tubing or tape which is wrapped to form convoluted tubing in a symmetrical and consistent form (FIG. 1) so that flexure stresses are spread uniformly throughout each convolution and over the entire length of conduit. The metal used to make the conduit is selected on a basis of chemical and thermal compatibility for the application. The thickness of the tube wall depends upon what is needed to resist the pressures anticipated during the intended service.

When the conduit must be more flexible than the convolutional geometry allows with a single wall thickness, multiple walls of thin, coaxial positioned tubes or metallic tape wound in multiple layers can be convoluted as shown in (FIG. 2) to reduce the force required to flex the conduit. FIG. 2A shows coaxial tubes and FIG. 2B shows multi-layers of tape. The unit stress on the metal is thus reduced so that the metal fatigue life is greatly improved. However, such a multi-layered conduit is more expensive than a single wall conduit.

When the anticipated service includes only a low level of vibration and cyclic flexure, the use of the multiple wall conduits together with a symmetric and consistent convolution form is a good solution for endurance against extreme fatigue. However, when severe and variable sinusoidal or random vibrations are also involved or when flexure is at very high frequency, the natural frequency, and the consequences of resonance must be considered. In this case, the assembly with the multiple wall has a lower spring rate and thus has an inherently lower natural frequency, with a higher amplification factor, as compared with a stiffer single wall conduit of the same wall thickness and convolution configuration.

Natural vibration frequencies often fall in the normal operating frequency of the equipment, e.g. the normal RPM of an engine causes sympathetic resonant vibrations in the conduit. This operating frequency may cause the conduit to experience resonance under normal operating conditions. Worse still, in these ranges, the natural vibration frequency of the conduit may match the resonant frequency of the engine. The resultant super-imposing of resonance on resonance creates an extreme, cyclic load amplification that leads to a fatigue failure in a relatively short time. Hence, prior art devices such as those shown in Figs. 1 and 2 have required some kind of external damping to prevent or inhibit this kind of self-destructive resonance.

In both FIG. 2A and FIG. 2B, there is a conventional multi-layer tube having uniform wall thickness. In the case of FIG. 2A, three nesting tubes 10, 12, 14 are coaxially positioned inside each other, and then, all three are convoluted as a unit. In the case of FIG. 2B, three layers of tape 20, 22, 24 are wound one over the other in an alignment which keeps edges 26, 28 of the tape layers opposite each other. Therefore, when the next layer 30 begins, it picks up where layer 20 left off to maintain a uniform thickness.

Another way of making a tube is by wrapping a tape lengthwise. For example, a long ribbon which is eighteen inches wide and two mill thick may be rolled into a tube which is two inches in diameter. The strip is rolled on itself to make a multi-walled tube. A brazing material such as nickel may be deposited or formed on the edges of the ribbon so that the formed tube may be heated to braze the edges of the ribbon and complete the tube. In the alternative, that same eighteen inch wide ribbon may be rolled in a spiral and lapped to make the tube that way. After the multi-layered tube is completed with the edges inside and outside, possibly brazed, it may be convoluted. Still another way of making a tube is to begin with a piece of welded, thin wall tubing and then to wrap tape around it. The inner tube is completely tight and the wrap laminated structure may then be convoluted. A variation of this approach is to use a single ribbon, wrap it up lengthwise and make a single or multi-wall tube out of it and then insert this into a thin wall welded tube, all of which are convoluted. Also, that wrapped ribbon can be covered with an outer spiral wrap and then convoluted. By making five layers of an inside tube, there is a certain amount of rigidity and a seal. Also, the tube is better able to take any internal pressure. The membrane forming the tube is placed under stress, which is additive for each layer. The tube without axial restraint can hold a certain amount of pressure (such as 15 to 100 psi) without causing a total deformation. With axial restaint, pressure can be increased ten-fold and more.

The innercore is formed by a thin strip which is wrapped (helical or axial) with or without an internal or external welded thin wall tube. The decision of whether to use a helical or axial, with or without convolutions, form of wrap is one of economics and available tube forming equipment. Both forms of wrap are acceptable, but the axial form gives a more consistent surface finish (no wrinkling) because the strip does not have to be stretched unevenly, as it is stretched with the helical wrap. The decision of whether to use thin wall welded tubes, internally or externally of a wrapped tube, or both, is dependent upon the need for a bubble tight integrity, the viscosity of the fluid media, the system pressure and temperature, and the level of reliability that is needed. For the usual automobile exhaust systems, a bubble tight construction is not needed. However, for an aircraft fuel system with flexible couplings, both a bubble tight and a highly reliable hose is needed. Usually, an extremely flexible and fatigue resistant hose is needed, along with the respective levels of sealing and reliability.

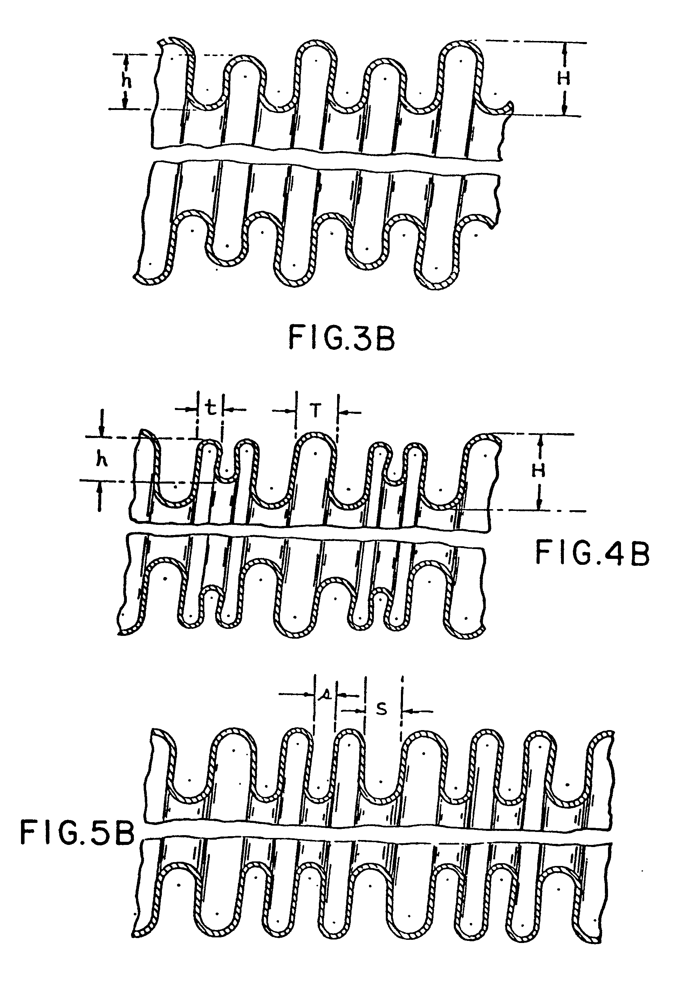

In greater detail, all conduits, including those shown in FIGS. 1 and 2, have within themselves some inherent self-damping capabilities. However, conduits shown in FIGS. 3-6 that use non-symmetrical convolutions with a varying convolutional form, height, spacing, plies, and wall thickness along the length of the conduit have much higher levels of self-damping. The convolution height, H, h, or the convolution thickness, T,t, or the convolution spacing, S, s, or any combination thereof, may be varied to significantly change the spring rate and the related natural frequencies between convolutions, and along incremental segment lengths of the conduit. Therefore, while some convolutions are experiencing an induced resonance, their neighboring convolutions, which have a different natural resonance frequency, do not synchronize with the convolutions which are then in resonance. In fact, adjacent convolutions tend to dampen the vibration of the nearby neighboring convolutions, thus making the entire conduit more self-damping.

The variations in convolution form are easily visualized and can be accomplished with machinery that convolutes multi-ply tubing or wraps one or more tapes at a time to form a multiple wall conduit. The spring rate can be changed substantially more than 10%, by using the techniques illustrated in FIGS. 3 thru 6. The larger variations in spring rate between convolutions become necessary when the conduit is subjected to external loads or high operating pressures. The external forces raise the spring rate and resonant frequency of the conduit, and reduce the effect of the original "free state" spring rate variation which in turn, reduces the self-damping of the conduit. On the other hand, as the spring rate changes more and more between convolutions, the distribution of strain between adjacent convolutions becomes more disproportionate. Then, the conduit's ability to flex becomes impaired because most of the flexing occurs in those convolutions which have the lowest spring rate. Therefore, care must be taken so that the non-symmetry of convolutions is great enough to assure self-damping under anticipated operating conditions, but also, is small enough to maintain the greatest possible uniformity of flexing.

When the convolutional form and variable plies (FIGS. 3, 4, and 5) alters the spring rate between convolutions, a use of concentric tubes to achieve multiple layers is practical, although it may be relatively expensive.

FIG. 3A shows a tube which might be manufactured from either coaxially nesting tubes or multi-ply wound layers 32, 34, 36. FIG. 3B shows essentially the same tube made from a single ply of tape. At the interfaces between the several layers, there is a bonding in random patterns. For example, FIG. 3 has been drawn with a bonding (such as brazing) at the interface between the inner two layers, as shown at 38, 38. The brazing is shown between the outer two layers at 40, 40, and between both layers at 42, 42. The brazing at 40 is on the sloping side walls of the convolution. The brazing at 38, 38 is symmetrical at the crest of a hill or the root of a dale forming the convolution. The brazing at 44 is asymmetrical relative to the geometry of a convolution. These showings indicate that brazing may be used in random patterns to restrict uniformity of resonance in adjacent convolutions. The effect of the brazing is to make walls of variable thickness.

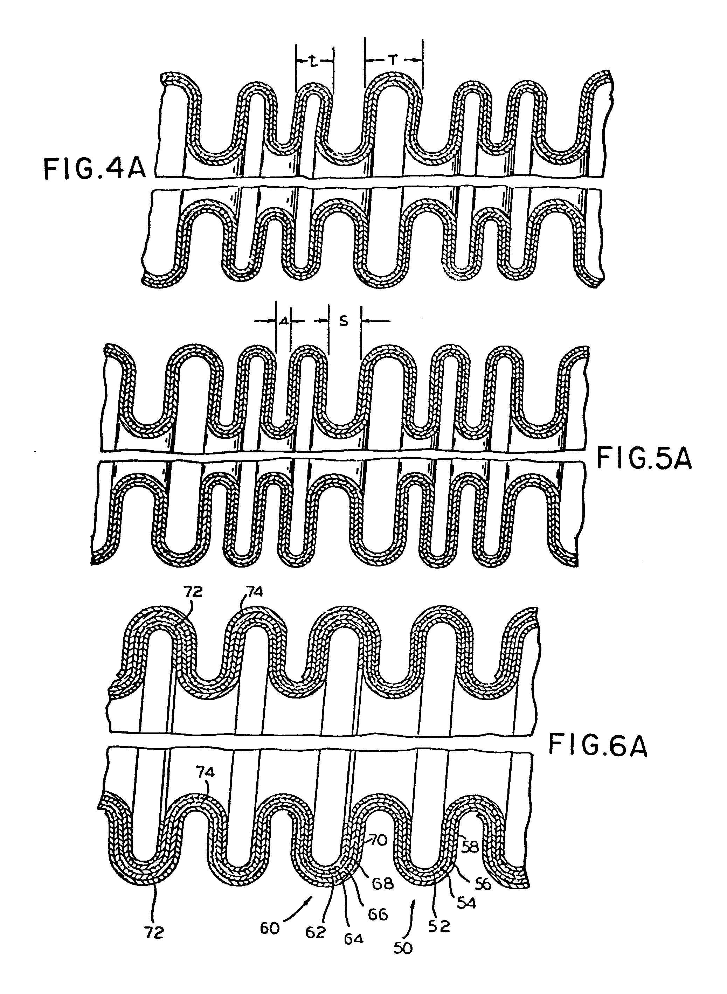

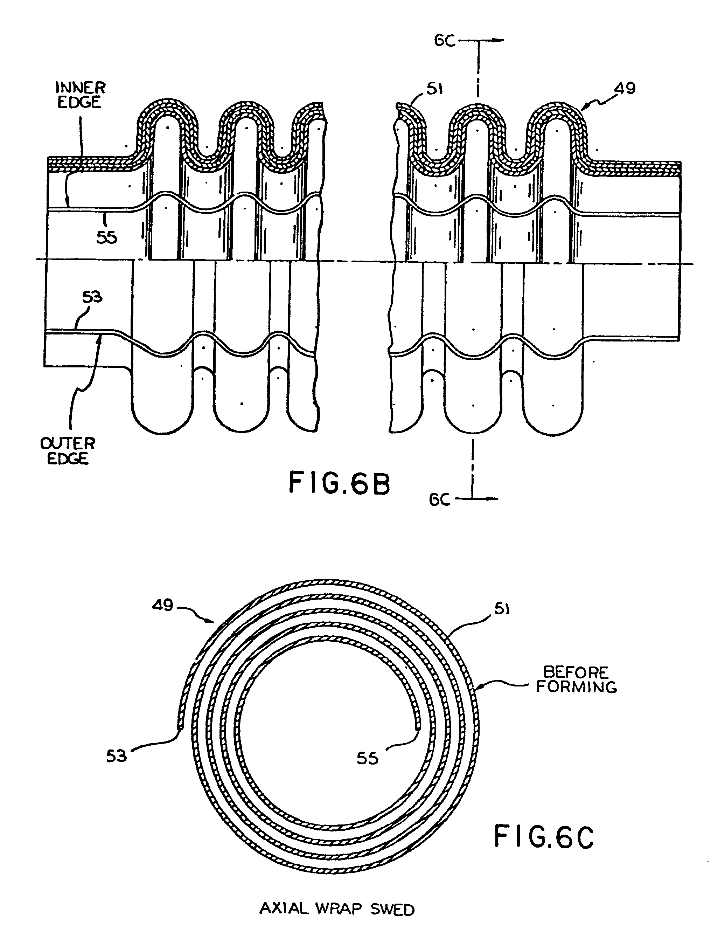

Another economical way to achieve a variation in spring rate between convolutions is to use a wrapped multi-layer structure (FIG. 6) with the wrapping tape overlapping itself in a non-uniform manner. The tape may be either helically or longitudinally (axially) wound upon itself. The overlapping edges of the helically wound tape can be made to end on a convolution in a manner that gives a variation in the thickness of layers and, therefore, a variation in the spring rate between convolutions. The strip edges of the longitudinally or axially wound tape may be given any suitable overlap to vary the width and radial thickness of a longitudinal strip extending along the length of the conduit.

More particularly, FIG. 6A shows a design where every other convolution of a helically wound conduit has either 4-layers or 5-layers at the root of the convoluted form. For example, at 50, there are four layers 52-58 of tape forming the wall of the conduit and, at 60, there are five layers 62-70 forming the wall of the conduit. By an inspection of FIG. 6A, it should be apparent that each successive convolution has a different number of layers, thereby giving each convolution a thickness which varies as compared to the thicknesses of its neighboring convolutions. However, alternative arrangements may be used. For example, sometimes one-third of the convolutions may be thicker or thinner than the remaining two-thirds of the convolutions. There may also be a variation in the form between adjacent convolutions to further refine the spring rate and the related natural frequency, as taught by combinations of the principles shown in FIGS. 3-6. Further, changes of form may be achieved by applying disposable layers of filler material of varying thicknesses to the inside surface of the conduit. When this disposable material of variable thickness is removed after the conduit is formed, there is a variation in the form of the conduit.

FIGS. 6B and 6C illustrate a conduit 49 made from a longitudinally or axially wound tape, wherein an initially flat ribbon 51 having edges 53, 55 is wound upon itself to make the conduit. In the embodiment of FIG. 6C the outer edge 53 is displaced 180° from the inner edge 55. This means that the upper half (as viewed in FIG. 6C) of the conduit 49 has five layers while the lower half has four layers. Accordingly, the upper half is a longitudinal strip which extends along the length of the conduit and which is stiffer than the lower half.

The same principles enable the outer edge 53 to be displaced from the inner edge 55 by any convenient angular distance in the range of 0° - 180°, thus giving the stiffer section any suitable width. Each convolution in this axially wound conduit may be the same as its neighboring convolutions, but the radial variations provide self-damping. The result is that any of many different tuning adjustments may be made. It is also noted that, by changing the length of the conduit, a different natural frequency may be selected.

The longitudinally or axially wrapped embodiment of FIGS. 6B, 6C has several advantages over other forms of wraps. First, the longitudinal wrap is smoother and, therefore, more wrinkle-free than the helical wrap. Second, the two edges 53, 55 have the same length which eliminates some problems and simplifies the design as compared with the helical wrap where one edge is longer than the other.

The multi-layered conduit of FIGS. 6A - 6B may be made into a sealed, bubble-proof conduit so that there is no passageway for enabling an escape of fluid from the conduit. One way of sealing the multi-layers of the tape is to provide a layer of gasket material on either the inside or the outside of the conduit by laying down a strip of the gasket material as either the first or the last wrap. The gasket material may be either metallic or non-metallic. The appropriateness of this approach depends in part upon the characteristics of the fluid inside the conduit, upon its corrosive effects and impact, and upon how thin the various tapes may be. With these considerations in mind, the tape thickness is selected to avoid creating mechanical problems.

Another approach for sealing the conduit is to provide a relatively soft solder which may be applied in a liquid phase as a wash to coat the inside of the conduit.

Still another way of sealing the conduit is to provide a brazing material between the layers of the multi-layer wrap, as by plating a surface of the primary metal (e.g. stainless steel) tape with a brazing material such as copper. Yet another way is to apply successive wraps of steel tape and copper tape, for example, in alternate layers. The brazing material may cover either the entire surface of the tape or part of the surface of the tape, such as at just the edges of the tape which make the wall of the conduit. The resulting conduit is then placed in a brazing furnace which melts the brazing material and bonds the confronting surfaces of the steel tape, thereby making a unitary conduit wall. When the interface is only partly bonded by brazing, the brazed versus non-brazed area create a variation in plies which cause a substantial change in the stiffness and spring rate between convolutions of the conduit.

A string 72 or a tape 74 of gasket or packing material may be interposed between adjacent layers of the metal tape. Since the metal tape is tightly wound into the conduit form, the packing material is compressed between the layers of the tape.

The invention provides a means for tuning the assemblies to avoid resonance at anticipated vibration inputs and to maintain a quiet system. The design formula for resonance is:

$$N_F = K / \sqrt{\frac{S_R}{M}}$$

where:

$N_F$ = Natural Frequency

$S_R$ = Stiffness (spring rate under installed conditions)

$M$ = Mass

$K$ = a constant that depends on the convoluted innercore construction, the degree of braid slackness, and the number and position of the tuning rings. The K constant is established empirically for each variation in design.

The concept is to make non-symmetrical convolutions that will be self-damping as a result of its unique design. A continuous, helically or axially-wrapped tape is formed with or without metallic or non-metallic tape interlayers to help seal the multi-ply, non-uniform convoluted wall thickness that is self-damping. In many cases, the FIG. 6 method of varying the wall thickness is substantially less expensive than non-symmetrical convoluted multi-ply conduit. In any of its many forms, a principal advantage of the multi-ply conduit is that it may be made with bubble tight seams, even at very high internal pressures.

For exhaust systems which operate at low pressures, when either tape-formed or tube-formed multi-ply non-symmetrical convoluted metal hose do not have to be bubble tight, the use of the non-symmetrical, wrapped form is preferred. In each case, adjacent convolutions are self-damping under resonance conditions. The choice of design depends upon the operating conditions and upon the economics for the application.

Concentric multi-ply tubes with brazing tape wrapped between tube interfaces create a variable ply geometry between convolutions. Wherever the surface between two tubes is brazed, the structure behaves as though the two bonded plies are, in fact, one wall thickness. Thus, bonding changes the thickness considerably.

One solution to the problem of a severe combination of vibration and flexure is to provide both multiple walls for flex endurance and a damping mechanism to reduce the amplitude and duration of the resonance vibrations. The damping might be provided by an external means which is used on or in connection with the conduit. However, the high operating temperature precludes the use of elastomers and the like on most exhaust systems for an internal combustion engine.

In greater detail, a conduit tends to vibrate as a taut string vibrates, with nodes and loops forming a standing wave. The loops may vary in length, depending upon the frequency of the vibration. An engine or related device tends to produce vibrations at a fixed frequency or in a frequency band, depending upon its operations. Therefore, if the conduit is forced to form itself into nodes and loops at locations and lengths which do not coincide with the nodes and loops of the fixed frequency or frequency band of vibrations produced by the associated device, the conduit may be tuned to vibrate at some other frequency which is not likely to occur in the system. With such tuning, the conduit becomes much less likely to vibrate at the frequencies which actually do occur.

The foregoing description has set forth various techniques by which the incremental lengths of the conduit may be given different vibrational chacteristics, to preclude an overall conduit resonance. These same techniques may be used to tune the conduit. For example, the conduit may be stiffened in the areas where the conduit would naturally want to form a loop, at the pertinent and characteristic frequency of the engine. The areas where the conduit would naturally want to form nodes at these characteristic frequencies may be made relatively more flexible. Thus, it becomes more difficult for the conduit to develop a standing wave if the conduit inherently opposes the characteristics of that standing wave. The lengths of the stiffened and flexible areas may be selected to coincide with a frequency which is not likely to be produced by the device (engine) connected to the conduit. Thus, the conduit may be tuned out of the vibrating range of the system.

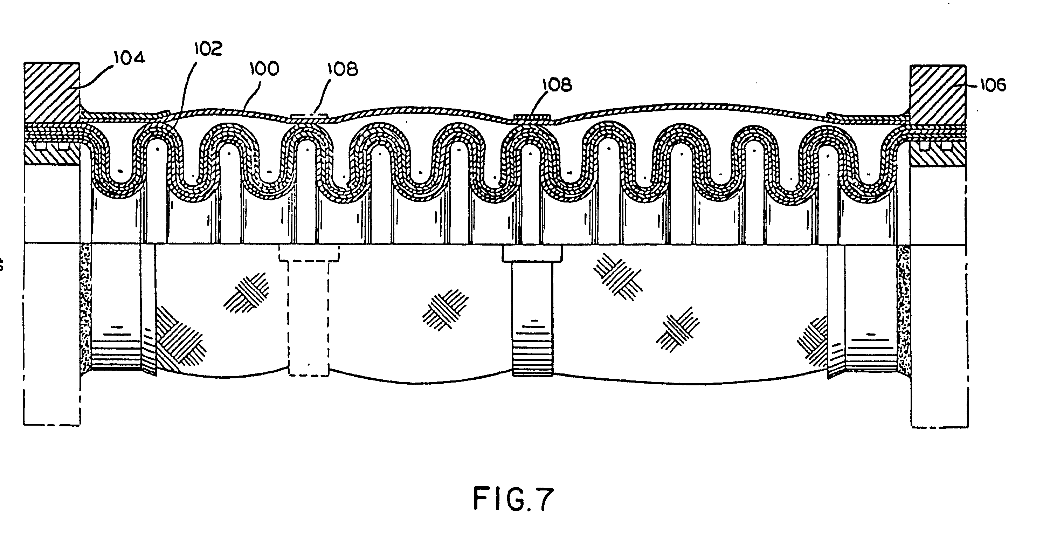

This principle may be carried further by providing an outer braid sleeve or stocking 100 (Fig. 7) loosely covering and extending along the length of a conduit 102. If the bias pole of the braid is changed or if the diameter of the braid wire is changed, the flexibility and vibrational characteristic of the sleeve or stocking is also changed.

The braid serves three purposes. First, it adds pressure carrying capability to the innercore. When this capability is the primary need, the braid is normally snug fit over the innercore, with little or no slack. Second, the braid provides an armor protection for the innercore, to guard it from abrasion or impact. Third, by varying the braid pattern and the degree of the braid slack on the hose, the stiffness and related resonant frequency of the assembly may be varied to some extent in order to dampen the resonance of the innercore by making a random contact between the innercore and the braid, which vibrates out of phase with the innercore and causes noise and chafes the innercore.

Both the braid sleeve or stocking 100 and conduit 102 are anchored at either end by a mechanical device 104, 106 of any suitable design (as by welding). The braid sleeve or stocking may, for example, be a stainless steel braid, or the like. It seems apparent that in such a conduit, nodes are likely to be formed at the ends 104, 106 of the conduit and that the length of conduit extending between these ends is likely to form one or more loops, depending upon the frequency of vibration. Therefore, to prevent a standing wave with such a loop, a band or tuning ring 108 may surround the sleeve or stocking 100 to attach it to the conduit.

These tuning rings are installed, as needed, over the braid to keep the braid and the innercore in contact so that the braid can dampen the innercore without noise and chafing caused by impact. The positioning of the rings varies the stiffness of the assembly so that the natural frequency and the related harmonics can avoid the peak vibration modes which might otherwise be generated by the system (i.e. the auto engine, the fuel pump, etc.). Also, the tuning rings can be used in conjunction with the braid and other structures to enable the assembly to be tuned with a minimum noise and a minimum life.

There are an infinite number of variations for using and applying the three elements of an innercore, braid, and tuning rings. The tubes may be tuned by changing the stiffness of the innercore alone. For some applications, a very stiff assembly with a very high natural frequency is suitable because flexibility requirements are very, very modest. For an exhaust system connection, an extremely high level of flexibility is required. This high level of flexibility may be achieved by an innercore which has a very low level stiffness, and which resonates at low frequencies with many harmonics that fall within the range of system vibration frequencies. The wire braid and tuning rings proivde stiffness (increase natural frequency) to the assembly and dampen the innercore resonance that occurs while still allowing a substantial level of flexibility of design for the innercore, to achieve a maximum flex endurance with a minimum noise level.

If the length of the conduit is close to the length of a loop for a fundamental frequency of the engine vibrations, which is likely to occur, the band or tuning ring 108 is positioned in the middle of that length to give a maximum damping at the crest of the loop. However, it the length of the conduit is equal to a multiple of the length of such loops for the frequency which is likely to occur, a plurality of bands or tuning rings 108 may be used, one at the crest of each loop. Likewise, if the vibrations are such that the conduit would respond to a second or third harmonic, a plurality of bands or tuning rings may be provided, one at the crest of each of the loops in those harmonics.

If, as is preferred, the bands or tuning rings 108 are drawn tightly around the braid sleeve or stocking 100 and conduit 102, the damping occurs as a result of the clamp holding the conduit with brute force. However, if the bands or tuning rings 108 loosely hold the sleeve or stocking in place on the conduit, there is an attenuation resulting from the internal mechanical working of the system as the conduit slightly moves back and forth with the sleeve or stocking, the conduit randomly colliding with the sleeve or stocking on each movement.

In a preferred embodiment, the conduit corrugations are annular, although helical corrugations may also be used. The individual plies of the conduit wall are made of steel and may be in the order of 0.001 to 0.010 inches thick. The sleeve or stocking 100 may be a braid of steel wire having a wire diameter in the order of 0.008 to 0.032 inches. The braid is somewhat slack, except where it is secured by the bands 108. This slackness provides for expansion and contraction of the conduit. Attenuation also occurs as a result of the internal working of the metal which forms the sleeve or stocking.

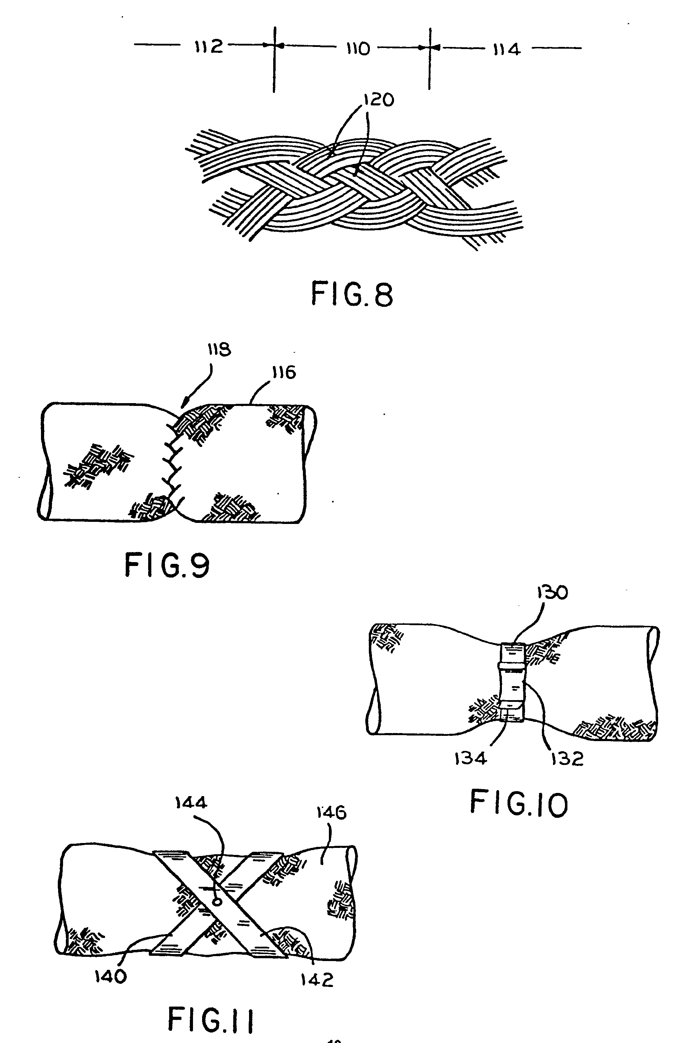

The tuning bands may be made in a number of different ways (FIGS. 8-11), a primary consideration being whether the conduits are sold to original equipment manufacturers or on the replacement or after market. An original equipment manufacturer makes thousands of identical units and therefore, a need for stocking many different types of parts uniquely dedicated to a particular model is less important than the savings of a few cents per part. On the other hand, in the replacement or after market, a savings of a few cents per part is much less important than the cost of having to stock many different types of parts, some of which may never be used.

For the original equipment market, the tuning rings may be built into the braid, itself (FIGS. 8, 9). Thus, for example, the pack of the braid (FIG. 8) may be varied so that it is very tightly woven in the area 110 where a tuning ring appears and loosely woven at 112, 114 which are outside of the tuning ring area. In another embodiment, the angle at which the braid is laid down may be changed to stiffen the areas of the tuning ring. Still another method of forming the braid 116 itself into tuning rings is to twist it (FIG. 9) about its longitudinal axis in the area 118 of the tuning ring. Still another method is to snag some wires of the braid to gather it in the area of the tuning rings. In any of these embodiments, further stiffness may be added by spot welding the braid (shown at "X" marks 120, by way of example) in the area of the tuning rings.

In the after market, the rings may simply be bands 130 which are wrapped around the braid and then drawn tightly. This may be done by wrapping and welding or by the use of special tools somewhat similar to the tools used to attach metal strapping around a shipping box. As shown in FIG. 10, the special tool has crimped a strap fastener 132 around the braid, after which the end of the strap is cut off at 134. Another approach is to provide tuning rings which may be tightened. For example, a radiator hose clamp type of tuning band may be tightened by the use of a screw driver or wrench.

Still another type of self-tightening tuning ring comprises two generally oval bands 140, 142 (FIG. 11) nested in each other and joined by a pair of diametrically opposed pivot points, one of which is seen at 144. The oval shape gives the rings an inside diameter which is large enough to enable them to slide freely over the braid 146. When the rings are in place, they are spread apart, as shown in FIG. 11, to surround the braid 146 at an angle, which has oval cross-section. This causes the rings 140, 142 to tighten upon and seize the braid 146 and innercore (not shown in FIG. 11). One aspect of this type of tuning ring is that there is a variable and controlled amount of stiffness moving from a relatively more flexible area at the outer edges of the rings to a relatively more stiff area at the cross over points 144 where the rings intersect.

The principles described above may be modified somewhat according to specific needs of any given system. The design variables are as follows:

1. Add metallic "band" along the length of the conduit with or without slack wire braid.

2. Add elastomeric "band", with or without slack wire braid.

3. Lengthening the lead (pitch) of the braid increases axial and lateral force, with or without slack wire braid.

4. Use heavier wires to make the braid increase in the overall stiffness, with or without slack wire braid.

5. Tighter braid (no slack wire) increases the stiffness of the conduit and inhibits the convolution movement.

6. Looser braid (slack wire) reduces the stiffness and enables the innercore to move freely in all planes without dampening, except when contact is made as when the braid and innercore vibrate randomly, relative to one another.

7. Use of an elastomeric layer, full length outside braid, increases weight, cost and stiffness, and adds dampening to the dampening provided by the braid, in Items 1 through 6, above.

8. Use of elastomeric mold outside the convoluted innertube; however, inside, the braid can be used to inhibit or dampen the innercore axial and lateral motion, in Items 1 through 6, above.

9. External metal brackets can be added to inhibit axial motion and to restrict lateral motion for Items 1 through 8, above.

10. External or internal telescoping (dash pot) tubes can be added to inhibit and restrict both axial and lateral motion for Items 1 through 8, above.

11. Change wall thickness, convolution geometry or convolution count for the innercore in conjunction with any or none of Items 1 through 10, above.

By using these principles, the conduit may be tuned to have a resonance characteristic at any desired one of many possible frequencies.

The tuning of the system and the control over the vibration of the conduit also dampens the noise within the conduit which is generated by the device coupled thereto, such as an engine or compressor. Thus, the device runs quieter. The absence of muffler baffles within the conduit tends to reduce the amount of power loss which is normally experienced with other sound reduction systems.

Other configurations may be used in making a tunable resonant exhaust conduit system, such as by attaching or affixing longitudinal cords or straps at the terminal ends of the conduit system and by attaching the other end of the cords or straps to the nodal cross-member bands 108. By adjusting the bands 108 diameters and the tautness of the suspension cords or straps, the conduit system can be tuned accordingly.

## Claims

1. A convoluted conduit made of metal which is capable of sustaining a resonate vibration at engine caused frequencies for inclusion in an exhaust system of an automotive vehicle, in which the individual convolutions of said conduit have variations of physical characteristics (H,h,T,t,S,s, wall thickness) such that the physical characteristics which react to vibration of each convolution is different from the physical characteristics of at least some of its neighboring convolutions, whereby said conduit does not have a uniform resonant frequency throughout its length, said variations in said convolutions being large enough to have resonance at different frequencies to assure self-damping between adjacent convolutions and small enough to maintain a maximum uniformity of flexing, and in which at least one layer (52-58, 62-70) forms a conduit wall, characterized in that stocking means (100) of flexible material loosely surrounds the conduit and extends along the length thereof, and at least one tuning band (108) surrounding said stocking means is adapted to secure it to said conduit at a point between opposite ends (104, 106) of said conduit.

2. The conduit of claim 1 characterized in that said variations are variations in at last one of height, thickness, form and pitch of successive convolutions.

3. The conduit of claim 2 characterized in that there are a plurality of layers of metal tape wrapped over each other to form the walls of a tubular structure.

4. The conduit of claim 3 characterized in that the conduit further comprises a plurality of coaxial layers forming a multi-layered convoluted wall, the layers being arranged to provide a conduit wall of variable thickness whereby successive incremental areas of said conduit have different resonant characteristics.

5. The conduit of claim 4 characterized in that sealing means (72, 74) are interposed between at least some of said plurality of layers for sealing the wall of said conduit, thereby making the wall of said conduit behave as a single wall thickness in the areas where said sealing means is interposed.

6. The conduit of claim 1 characterized in that said conduit is made of coaxial tubes, selected surface areas of said coaxial tubes being bonded together to function as a single wall thickness, whereby the effective thickness of said conduit is different depending upon where overlapping layers are and are not bonded together.

7. The conduit of any preceding claim characterized in that said band is positioned at a location where a loop naturally forms in said conduit as a result of vibrations in said system.

8. The conduit of any preceding claim, characterized in that said conduit has a length which is likely to form a plurality of said loops, and a plurality of said bands (108, 108), each of said bands being positioned tightly to clamp said stocking to said conduit at a point where one of said loops is likely to form.

9. The conduit according to any preceding claim, characterized in that the conduit extends between two anchor points (104, 106) at opposite ends of said conduit, the stocking means (108) surrounds said conduit and extends between said two anchor points (104, 106), and the location of said tuning band relative to said two anchor points is selected to provide different resonant characteristics in different areas of said conduit.

10. The conduit of any preceding claim, characterized in that said conduit comprises an elongated tape wound longitudinally on itself to form a convoluted cylindrical tube.

11. The conduit of claim 10, characterized in that the opposing longitudinal edges of said tape are angularly positioned relative to each other in order to provide a stiffened longitudinal strip of selected width extending along the length of the conduit.

12. The conduit of claim 11, characterized in that the opposing edges are offset from each other by a radial angle in the range of 0°-180°.

13. The conduit of claim 10, characterized in that said wound tape is inside a thin walled tube.

14. The conduit of claim 9, characterized by further comprising at least one layer forming a conduit wall, said stocking means of flexible material loosely surrounding the conduit and extending along the length thereof, said stocking being formed to provide at least one unitary tuning ring for securing it to said conduit.

15. The conduit according to any preceding claim, characterized in that conduit comprises tape wrapped upon itself to form a multi-layer (52-58, 62-70) tube, and said tape has at least some areas which may have a selectable overlap to give the tube a wall thickness in said area to establish a mass and spring rate of said wall in selected areas along the length thereof, said conduit being convoluted to convert said layers of tape into a unitary wall structure, and the distribution of said areas throughout said convoluted wall being distributed to detune the conduit so that it will resist sympathetic vibrations during an operation of said automotive exhaust system.

16. The conduit of claim 15, characterized in that there are a plurality of layers of said metal tape wrapped over each other to form the walls of a tubular structure.

17. The conduit of claim 15, characterized in that said area in which overlap is selectable extends axially along the length of said conduit.

18. The conduit of claim 15, characterized in that said area in which overlap is selectable extends peripherally around said conduit.

19. The conduit of claim 17, characterized in that said overlap area extends over an arc of 180° of conduit wall circumference.

20. The conduit of claim 17, characterized in that said overlap extends over an arc of 0°-180° of conduit wall thickness.

21. The conduit of claim 15, characterized in that the conduit further comprises a plurality of coaxial tubes comprising at least one seamless tube and at least one wrapped tape tube.

22. The conduit of claim 21, characterized in that said tape tube comprises a spiral tape helically wound around the external surface of said seamless tube.

23. The conduit of claim 21, characterized in that said tape tube comprises an axially wound tape inside said seamless tube.

24. The conduit of claim 21, characterized in that said tube comprises a spiral tape, helically wound tube inside said seamless tube.

25. The conduit of claim 21, characterized in that said tape tube comprises a ribbon axially wound around the outside of said seamless tube.

26. The conduit of claim 15, characterized in that the conduit comprises at least two coaxial layers of wrapped tape, one of said layers being an axially wrapped ribbon and the other of said layers being a spiral tape helically wrapped.

27. The conduit of claim 26, characterized in that an inner one of said tubes is said axially wrapped tube, and an outer one of said tubes is said helically wrapped tube.

28. The conduit of any of claims 2-27 characterized in that said tape comprises stainless steel.

Patentansprüche

1. Gefaltetes Metallrohr für den Einbau in ein Auspuffsystem eines Kraftfahrzeugs, das eine Resonanzschwingung bei maschinenerzeugten Frequenzen aushalten kann, wobei die einzelnen Falten Abwandlungen von physikalischen Eigenschaften (H,h,T,t,S,s, Wandstärke) aufweisen, so daß sich die physikalischen Eigenschaften, die auf die Schwingung einer jeden Falte wirken, von den physikalischen Eigenschaften wenigstens einiger ihrer benachbarten Falten unterscheiden, wobei das Rohr über seine Länge keine einheitliche Resonanzfrequenz besitzt und die Abwandlungen der Falten groß genug sind, um eine Resonanz bei verschiedenen Frequenzen zu haben, damit eine Selbstdämpfung zwischen benachbarten Falten gewährleistet ist, und die klein genug sind, um eine maximale Gleichförmigkeit der Beigung aufrechtzuerhalten, **dadurch gekennzeichnet**, daß eine Strumpfvorrichtung (100) aus biegsamem Material das Rohr lose umgibt und sich in dessen Länge erstreckt, und daß wenigstens ein Abstimmband (108), welches die Strumpfvorrichtung umgibt, so ausgelegt ist, daß diese an einem Punkt des Rohrs befestigt wird, der zwischen einander gegenüberliegenden Enden (104, 106) des Rohrs liegt.

2. Rohr nach Anspruch 1, **dadurch gekennzeichnet**, daß die Abwandlungen solche sind, die wenigstens eine von Höhe, Dicke, Form und Teilung von aufeinanderfolgenden Falten betreffen.

3. Rohr nach Anspruch 2, **dadurch gekennzeichnet**, daß mehrere Metallbandschichten übereinander gewickelt sind, um die Wände einer rohrförmigen Struktur zu bilden.

4. Rohr nach Anspruch 3, **dadurch gekennzeichnet**, daß das Rohr außerdem mehrere koaxiale Schichten aufweist, die eine mehrschichtige gefaltete Wand bilden, wobei die Schichten so angeordnet sind, daß eine Rohrwand von variabler Stärke entsteht und wobei aufeinanderfolgende inkrementale Bereiche des Rohrs unterschiedliche Resonanzcharakteristiken aufweisen.

5. Rohr nach Anspruch 4, **dadurch gekennzeichnet**, daß eine Abdichtungsvorrichtung (72, 74) zwischen wenigstens einigen der mehreren Schichten angeordnet ist, um die Wand des Rohrs abzudichten, wodurch sich die Wand des Rohrs wie eine Einzelwanddicke in den Bereichen verhält, wo die Abdichtungsvorrichtung vorgesehen ist.

6. Rohr nach Anspruch 1, **dadurch gekennzeichnet**, daß das Rohr aus koaxialen Rohren besteht, wobei ausgewählte Oberflächenbezirke der koaxialen Röhren miteinander verbunden sind, um als Einzelwanddicke zu wirken, wobei die effektive Dicke des Rohrs verschieden ist, und zwar in Abhängigkeit davon, wo überlappende Schichten miteinander verbunden und nicht miteinander verbunden sind.

7. Rohr nach einem beliebigen der vorangegangenen Ansprüche, **dadurch gekennzeichnet**, daß das Band dort angeordnet ist, wo sich in dem Rohr eine Schleife aufgrund von Schwingungen in dem System bildet.

8. Rohr nach einem beliebigen der vorangegangenen Ansprüche, **dadurch gekennzeichnet,** daß das Rohr eine Länge aufweist, die wahrscheinlich mehrere dieser Schleifen bildet, und daß mehrere Bänder (108, 108) vorgesehen sind, von denen jedes Band fest angeordnet ist, um die Strumpfvorrichtung mit dem Rohr an einem Punkt zu verklammern, wo sich wahrscheinlich eine der Schleifen herausbildet.

9. Rohr nach einem beliebigen der vorangegangenen Ansprüche, **dadurch gekennzeichnet,** daß sich das Rohr zwischen zwei Ankerpunkten (104, 106) an entgegengesetzten Enden des Rohrs erstreckt, daß die Strumpfvorrichtung (108) das Rohr umgibt und sich zwischen den beiden Ankerpunkten (104, 106) erstreckt, und daß die Anordnung des Abstimmbands relativ zu den beiden Ankerpunkten so ausgewählt ist, daß sich unterschiedliche Resonanzcharakteristiken in verschiedenen Bereichen des Rohrs ergeben.

10. Rohr nach einem beliebigen der vorangegangenen Ansprüche, **dadurch gekennzeichnet,** daß das Rohr ein verlängertes Band aufweist, das in Längsrichtung um sich selbst gewunden ist, um ein gefaltetes zylindrisches Rohr zu bilden.

11. Rohr nach Anspruch 10, **dadurch gekennzeichnet,** daß die sich gegenüberliegenden Längskanten des Bands winklig zueinander angeordnet sind, um einen versteiften Längsstreifen von ausgewählter Breite zu bilden, der sich längs des Rohrs erstreckt.

12. Rohr nach Anspruch 11, **dadurch gekennzeichnet,** daß die sich gegenüberliegenden Kanten durch einen Radialwinkel in der Größe von 0° - 180° versetzt sind.

13. Rohr nach Anspruch 10, **dadurch gekennzeichnet,** daß das gewundene Band innen ein dünnwandiges Rohr ist.

14. Rohr nach Anspruch 9, **dadurch gekennzeichnet,** daß außerdem wenigstens eine Schicht vorgesehen ist, die eine Rohrwand bildet, wobei die Strumpfvorrichtung aus biegsamem Material das Rohr lose umgibt und sich in dessen Längsrichtung erstreckt und wobei die Strumpfvorrichtung so ausgebildet ist, daß sie wenigstens einen einheitlichen Abstimmring bildet, um diesen an dem Rohr zu befestigen.

15. Rohr nach einem beliebigen der vorangegangenen Ansprüche, **dadurch gekennzeichnet,** daß das Rohr ein Band aufweist, das um sich selbst gewickelt ist, um ein Mehrschichtrohr (52 - 58, 62 - 70) zu bilden, wobei dieses Band wenigstens einige Bereiche hat, die eine auswählbare Überlappung besitzen können, um dem Rohr in diesem Bereich eine solche Wandstärke zu verleihen, daß in Längsrichtung eine Massen- und eine Federkonstante der Wand im ausgewählten Bereich entsteht, wobei das Rohr gefaltet ist, um die Schichten des Bands in eine einheitliche Wandstruktur umzuformen, und wobei die Verteilung dieser Bereiche über die gefaltete Wand so erfolgt, daß das Rohr verstimmt wird und Resonanzschwingungen während des Betriebs der Kraftfahrzeug-Abgasanlage widersteht.

16. Rohr nach Anspruch 15, **dadurch gekennzeichnet,** daß mehrere Schichten des übereinander gewickelten Metallbands vorgesehen sind, um die Wände einer rohrförmigen Struktur zu bilden.

17. Rohr nach Anspruch 15, **dadurch gekennzeichnet,** daß sich der Bereich, in welchem die Überlappung auswählbar ist, axial in Längsrichtung des Rohrs erstreckt.

18. Rohr nach Anspruch 15, **dadurch gekennzeichnet,** daß sich der Bereich, in welchem die Überlappung auswählbar ist, umfangsmäßig um das Rohr erstreckt.

19. Rohr nach Anspruch 17, **dadurch gekennzeichnet,** daß sich der Überlappungsbereich über einen Bogen von 180° des Rohrwandumfangs erstreckt.

20. Rohr nach Anspruch 17, **dadurch gekennzeichnet,** daß sich die Überlappung über einen Bogen von 0° - 180° der Rohrwandstärke erstreckt.

21. Rohr nach Anspruch 15, **dadurch gekennzeichnet,** daß das Rohr außerdem mehrere Koaxialröhren mit wenigstens einer nahtlosen Röhre und wenigstens einer Wickelbandröhre aufweist.

22. Rohr nach Anspruch 21, **dadurch gekennzeichnet,** daß die Bandröhre ein Spiralband aufweist, das spiralförmig um die äußere Oberfläche der nahtlosen Röhre gewickelt ist.

23. Rohr nach Anspruch 21, **dadurch gekennzeichnet,** daß die Bandröhre ein axial gewickeltes Band innerhalb der nahtlosen Röhre umfaßt.

24. Rohr nach Anspruch 21, **dadurch gekennzeichnet,** daß die Röhre ein schraubenförmig gewickeltes Spiralband innerhalb der nahtlosen Röhre aufweist.

25. Rohr nach Anspruch 21, **dadurch gekennzeichnet,** daß die Bandröhre einen Gummi aufweist, der axial um die Außenseite der nahtlosen Röhre gewickelt ist.

26. Rohr nach Anspruch 15, **dadurch gekennzeichnet,** daß das Rohr wenigstens zwei koaxiale Schichten aus gewickeltem Band aufweist, wobei eine dieser Schichten ein axial gewickelter Gummi und die andere dieser Schichten ein schraubenförmig gewickeltes Spiralband ist.

27. Rohr nach Anspruch 26, **dadurch gekennzeichnet,** daß eine innere der Röhren die axial gewickelte Röhre ist und daß eine äußere dieser Röhren die schraubenförmig gewickelte Röhre ist.

28. Rohr nach einem beliebigen der Ansprüche 2 bis 27, **dadurch gekennzeichnet,** daß das Band rostfreien Stahl enthält.

## Revendications

1. Conduit plissé en accordéon réalisé en métal, qui est capable d'entretenir une vibration résonante à des fréquences engendrées par un moteur, à incorporer dans un système d'échappement d'un véhicule automobile, dans lequel les plis en accordéon individuels dudit conduit présentent des variations de caractéristiques physiques (H, h, T, t, S, s, épaisseur de paroi) telles que les caractéristiques physiques qui réagissent à une vibration de chaque pli en accordéon sont différentes des caractéristiques physiques d'au moins certains de ses plis en accordéon voisins, afin que ledit conduit ne possède pas une fréquence de résonance uniforme sur toute sa longueur, lesdites variations desdits plis en accordéon étant assez grandes pour avoir une résonance à des fréquences différentes afin d'assurer un auto-amortissement entre des plis en accordéon adjacents et assez petites pour maintenir une uniformité maximale de flexion, et dans lequel au moins une couche (52-58, 62-70) forme une paroi du conduit, caractérisé en ce qu'un moyen à fourreau (100) en matière flexible entoure librement le conduit et s'étend sur sa longueur, et au moins une bague d'accord (108) entourant ledit moyen à fourreau est conçue pour le fixer audit conduit en un point situé entre les extrémités opposées (104, 106) dudit conduit.

2. Conduit selon la revendication 1, caractérisé en ce que lesdites variations sont des variations d'au moins l'un des hauteur, épaisseur, forme et pas de plis en accordéon successifs.

3. Conduit selon la revendication 2, caractérisé en ce qu'il y a plusieurs couches de bande métallique enroulées les unes sur les autres pour former les parois d'une structure tubulaire.

4. Conduit selon la revendication 3, caractérisé en ce qu'il comporte en outre plusieurs couches coaxiales formant une paroi multicouche plissée en accordéon, les couches étant disposées de façon à former une paroi de conduit d'épaisseur variable afin que des zones progressives successives dudit conduit aient des caractéristiques de résonance différentes.

5. Conduit selon la revendication 4, caractérisé en ce que des moyens d'étanchéité (72, 74) sont interposés entre au moins certaines desdites couches pour l'étanchéité de la paroi dudit conduit, amenant ainsi la paroi dudit conduit à se comporter comme une épaisseur de paroi unique dans les zones où lesdits moyens d'étanchéité sont interposés.

6. Conduit selon la revendication 1, caractérisé en ce qu'il est formé de tubes coaxiaux, des zones de surface choisies desdits tubes coaxiaux étant liées entre elles pour fonctionner à la manière d'une épaisseur de paroi unique, afin que l'épaisseur effective dudit conduit soit différente suivant l'emplacement où des couches se recouvrant sont liées entre elles et ne sont pas liées entre elles.

7. Conduit selon l'une quelconque des revendications précédentes, caractérisé en ce que ladite bague est placée en un emplacement où un ventre se forme naturellement dans ledit conduit par suite de vibrations dans ledit système.

8. Conduit selon l'une quelconque des revendications précédentes, caractérisé en ce qu'il a une longueur à laquelle il est probable que se forment plusieurs desdits ventres, et plusieurs desdites bagues (108, 108), chacune desdites bagues étant placée de façon à serrer étroitement ledit fourreau sur ledit conduit en un point où l'un desdits ventres risque de se former.

9. Conduit selon l'une quelconque des revendications précédentes, caractérisé en ce qu'il s'étend entre deux points d'ancrage (104, 106) aux extrémités opposées dudit conduit, le moyen à fourreau (108) entoure ledit conduit et s'étend entre lesdits deux points d'ancrage (104, 106), et l'emplacement de ladite bague d'accord par rapport auxdits deux points d'ancrage est choisi pour établir des caractéristiques de résonance différentes dans différentes zones dudit conduit.

10. Conduit selon l'une quelconque des revendications précédentes, caractérisé en ce qu'il comporte une bande allongée enroulée longitudinalement sur elle-même pour former un tube cylindrique plissé en accordéon.

11. Conduit selon la revendication 10, caractérisé en ce que les bords longitudinaux opposés de ladite bande sont positionnés angulairement l'un par rapport à l'autre pour former une bande longitudinale raidie d'une largeur choisie s'étendant sur la longueur du conduit.

12. Conduit selon la revendication 11, caractérisé en ce que les bords opposés sont décalés l'un par rapport à l'autre d'un angle radial de l'ordre de 0° à 180°.

13. Conduit selon la revendication 10, caractérisé en ce que ladite bande enroulée est à l'intérieur d'un tube à paroi mince.

14. Conduit selon la revendication 9, caractérisé en ce qu'il comporte en outre au moins une couche formant une paroi du conduit, ledit moyen à fourreau en matière flexible entourant librement le conduit et s'étendant sur sa longueur, ledit fourreau étant formé de façon à constituer au moins un anneau d'accord d'une seule pièce destiné à être fixé audit conduit.

15. Conduit selon l'une quelconque des revendications précédentes, caractérisé en ce qu'il comporte une bande enroulée sur elle-même pour former un tube multicouche (52-58, 62-70), ladite bande présente au moins certaines zones qui peuvent avoir un recouvrement pouvant être choisi pour donner au tube une épaisseur de paroi dans ladite zone afin d'établir une masse et une raideur de ladite paroi dans des zones choisies sur sa longueur, ledit conduit étant plissé en accordéon pour transformer lesdites couches de bande en une structure de paroi d'une seule pièce, et la distribution desdites zones sur toute ladite paroi plissée en accordéon étant répartie de façon à désaccorder le conduit afin qu'il résiste à des vibrations de résonance durant le fonctionnement dudit système d'échappement d'automobile.

16. Conduit selon la revendication 15, caractérisé en ce qu'il y a plusieurs couches de ladite bande en métal enroulées les unes sur les autres pour former les parois d'une structure tubulaire.

17. Conduit selon la revendication 15, caractérisé en ce que ladite zone dans laquelle ledit chevauchement peut être choisi s'étend axialement sur la longueur dudit conduit.

18. Conduit selon la revendication 15, caractérisé en ce que ladite zone dans laquelle un chevauchement peut être choisi s'étend le long de la périphérie dudit conduit.

19. Conduit selon la revendication 17, caractérisé en ce que ladite zone de chevauchement s'étend sur un arc de 180° de la circonférence de la paroi du conduit.

20. Conduit selon la revendication 17, caractérisé en ce que ledit chevauchement s'étend sur un arc de 0° à 180° de l'épaisseur de la paroi du conduit.

21. Conduit selon la revendication 15, caractérisé en ce qu'il comporte en outre plusieurs tubes coaxiaux comprenant au moins un tube sans soudure et au moins un tube à bande enroulée.

22. Conduit selon la revendication 21, caractérisé en ce que ledit tube à bande comprend une bande spirale enroulée en hélice autour de la surface extérieure dudit tube sans soudure.

23. Conduit selon la revendication 21, caractérisé en ce que ledit tube à bande comprend une bande enroulée axialement à l'intérieur dudit tube sans soudure.

24. Conduit selon la revendication 21, caractérisé en ce que ledit tube comprend un tube à bande spirale enroulée en hélice à l'intérieur dudit tube sans soudure.

25. Conduit selon la revendication 21, caractérisé en ce que ledit tube à bande comprend un ruban enroulé axialement autour de l'extérieur dudit tube sans soudure.

26. Conduit selon la revendication 15, caractérisé en ce qu'il comporte au moins deux couches coaxiales de bande enroulée, l'une desdites couches étant un ruban enroulé axialement et l'autre desdites couches étant une bande spirale enroulée en hélice.

27. Conduit selon la revendication 26, caractérisé en ce que l'un, intérieur, desdits tubes est ledit tube enroulé axialement, et l'un, extérieur, desdits tubes est ledit tube enroulé en hélice.

28. Conduit selon l'une quelconque des revendications 2 à 27, caractérisé en ce que ladite bande comprend de l'acier inoxydable.

EP 0 234 706 B1

FIG.1
(PRIOR ART)

FIG.2A
(PRIOR ART)

FIG.2B
(PRIOR ART)

FIG.3A

14

FIG.3B

FIG.4B

FIG.5B

FIG.4A

FIG.5A

FIG.6A

EP 0 234 706 B1

INNER
EDGE

6C

51

49

55

53

OUTER
EDGE

FIG.6B

6C

49

51

BEFORE
FORMING

53

55

FIG.6C

AXIAL WRAP SWED

17

FIG.7

EP 0 234 706 B1

FIG.8

FIG.9

FIG.10

FIG.11

19